# EUROPEAN PATENT APPLICATION

(11) **EP 4 767 808 A1**
(43) Date of publication of application: **01.07.2026**
(21) Application number: 25223954.6
(22) Date of filing: 16.12.2025
(51) Int. Cl.: A01D 34/63, A01D 34/71, A01D 67/00

(54) **MOWER DECK AND MOWER**

(30) Priority: 27.12.2024 US 202419002770
(71) Applicant: Kubota Corporation, Osaka-shi, Osaka 530-0011 (JP)
(72) Inventor: TOOMBS, Chris, Gainesville, GA, 30507 (US); LONG, Luke, Gainesville, GA, 30507 (US)
(74) Representative: Müller-Boré & Partner Patentanwälte PartG mbB

(57) **Abstract**

A mower deck comprises a cutting blade (50), a top wall (12), a peripheral baffle (20), and a guard baffle (28). The cutting blade (50) is configured to rotate in a direction of rotation (DRT) around a rotational axis (AX) to clip grass. The cutting blade (50) is rotatably mounted on the top wall (12). The peripheral baffle (20) protrudes from the top wall (12). The top wall (12) and the peripheral baffle (20) define a cutting chamber (22) configured such that clippings of the grass flow in the cutting chamber (22). The peripheral baffle (20) defines a discharge opening (23) configured such that the clippings are discharged through the discharge opening (23). The guard baffle (28) protrudes from the top wall (12) in the cutting chamber (22) to guide the clippings toward the discharge opening (23).

## Description

### BACKGROUND

### TECHNICAL FIELD

The present disclosure relates to a mower deck and a mower.

### DISCUSSION OF THE BACKGROUND

The rear discharge mower releases the grass clipping in the rear center of the mower. However, it is difficult to control the releasing of the grass clipping to reduce an amount of the grass clipping on which rear wheels tread. The trodden grass clipping inhibits growth of the grass. In addition, it is important for the mower deck to keep the grass clippings from re-entering a cutting area in which the grass is usually cut by the cutting blade, because the re-entering grass clippings suppress a negative pressure generated in the cutting area which causes the grass to stand upright to be effectively cut by the cutting blade.

### SUMMARY

According to the present invention, a mower deck (10) comprises a cutting blade (50), a top wall (12), a peripheral baffle (20), and a guard baffle (28). The cutting blade (50) is configured to rotate in a direction of rotation (DRT) around a rotational axis (AX) to clip grass. The cutting blade (50) is rotatably mounted on the top wall (12). The peripheral baffle (20) protrudes from the top wall (12). The top wall (12) and the peripheral baffle (20) define a cutting chamber (22) configured such that clippings of the grass flow in the cutting chamber (22). The peripheral baffle (20) defines a discharge opening (23) configured such that the clippings are discharged through the discharge opening (23). The guard baffle (28) protrudes from the top wall (12) in the cutting chamber (22) to guide the clippings toward the discharge opening (23). With this configuration, it is possible to effectively keep the grass clippings from re-entering the cutting area (29).

In a preferred embodiment, the guard baffle (28) extends to the inner baffle end (28i) from the outer baffle end (28o) provided at the discharge opening (23), a distance between the rotational axis (AX) and the inner baffle end (28i) being shorter than a half of a cutting diameter (CD) of the cutting blade (50) as viewed along the rotational axis (AX). With this configuration, it is possible to more effectively keep the grass clippings from re-entering the cutting area (29).

In a preferred embodiment, the peripheral baffle (20) includes an arc section (24), and a guide section (25). The arc section (24) has an arc shape with respect to the rotational axis (AX). The guide section (25) is connected to the arc section (24) such that the arc section (24) and the guide section (25) are arranged in order along the direction of rotation (DRT) around the rotational axis (AX). The guide section (25) is provided opposite to the guard baffle (28) to guide the clippings toward the discharge opening (23). With this configuration, it is possible to discharge the grass clipping effectively.

Preferably, the guide section (25) has a linear shape as viewed along the rotational axis (AX) and projects in a projecting direction (DT1, DT2, DT3). A tangential direction of the arc section (24) at the junction (J1, J2, J3) of the arc section (24) and the guide section (25) is substantially identical to the projecting direction (DT1, DT2, DT3). With this configuration, it is possible to discharge the grass clipping smoothly.

In a preferred embodiment, the peripheral baffle (20) further comprises an additional guide section (26) connected to the arc section (24) opposite to the guide section (25). The guide section (25) has a proximal end (25p) connected to the arc section (24) and a distal end (25d) opposite to the proximal end (25p). The additional guide section (26) has an additional proximal end (26p) connected to the arc section (24) and an additional distal end (26d) opposite to the additional proximal end (26p). The distal end (25d) and the additional distal end (26d) define the discharge opening (23). The additional guide section (26) has a linear shape as viewed along the rotational axis (AX). The outer baffle end (28o) adjoins the additional distal end (26d). With this configuration, it maximizes a size of outlet of the cutting chamber (22) through which the grass clippings are discharged. Preferably, the outer baffle end (28o) is identical to the additional distal end (26d). With this configuration, the first guard baffle (28a) and the second additional guide section (26b) are formed by bending a single baffle plate.

In a preferred embodiment, the peripheral baffle (20) is free of an additional arc section having the arc shape with respect to the rotational axis (AX) and connecting the additional guide section (26) and the guard baffle (28). Accordingly, it reduces the material of the mower deck (10).

In a preferred embodiment, a gap between the guard baffle (28) and the cutting blade (50) along the rotational axis (AX) is so small such that a negative pressure is generated in a cutting area (29) opposite to an outlet (e.g. the discharge opening 23) with respect to the guard baffle (28), the outlet being defined between the guide section (25) and the guard baffle (28). With this configuration, the grass tends to be directed in the upward direction (DU) and thus, it facilitates cutting the grass by the cutting blades (50).

In a preferred embodiment, the guide section (25) is provided between the top wall (12) and the cutting blade (50) along the rotational axis (AX). The arc section (24) is wider than the guide section (25) along the rotational axis (AX) such that at least part of the cutting blade (50) overlaps with the arc section (24) as viewed in a radial direction with respect to the rotational axis (AX). This configuration avoids interference of rotation of the cutting blade (50), and makes the arc section (24) to effectively guide the clippings toward the discharge opening (23).

In a preferred embodiment, the mower deck (10) further comprises a deck wheel (16) configured to move the mower deck (10) in a front direction (DF) and a rear direction (DB) opposite to the front direction (DF). The discharge opening (23) is provided apart from the cutting blade (50) in the rear direction (DB). With this configuration, the mower deck (10) can discharge the clippings in the rear direction (DB).

In a preferred embodiment, the inner baffle end (28i) is apart from the rotational axis (AX) in the rear direction (DB). As viewed along the rotational axis (AX), the distance between the rotational axis (AX) and the inner baffle end (28i) is shorter than the distance (D3) between the rotational axis (AX) and the inner end (58) of the lift (56) of the cutting blade (50) in a radial direction (DRAD) with respect to the rotational axis (AX). With this configuration, it is possible to further effectively keep the grass clippings from re-entering the cutting area (29).

In a preferred embodiment, a mower (1) comprises the mower deck (10) having the features described above. With this configuration, it is possible to effectively keep the grass clippings from re-entering the cutting area (29).

According to the present invention, a mower deck (10) comprises a first cutting blade (50a), a second cutting blade (50b), a top wall (12), a first peripheral baffle (20a), a second peripheral baffle (20b), and a deck wheel (16). The first cutting blade (50a) is rotatable in a direction of rotation (DRT) around a first rotational axis (AX1). The second cutting blade (50b) is rotatable in the direction of rotation (DRT) around a second rotational axis (AX2). The first cutting blade (50a) and the second cutting blade (50b) are rotatably mounted on the top wall (12). The first peripheral baffle (20a) protrudes from the top wall (12) to define a first cutting chamber (22a) housing the first cutting blade (50a). The first peripheral baffle (20a) comprises a first arc section (24a) and a first guide section (25a). The first arc section (24a) has an arc shape with respect to the first rotational axis (AX1). The first guide section (25a) is connected to the first arc section (24a) such that the first arc section (24a) and the first guide section (25a) are arranged in order along the direction of rotation (DRT) around the first rotational axis (AX1). The first guide section (25a) projects in a first tangential direction (DT1) at a first junction (J1) of the first arc section (24a) and the first guide section (25a). The second peripheral baffle (20b) protrudes from the top wall (12) to define a second cutting chamber (22b) housing the second cutting blade (50b). The second peripheral baffle (20b) comprises a second arc section (24b) and a second guide section (25b). The second arc section (24b) has an arc shape with respect to the second rotational axis (AX2) and is connected to the first guide section (25a) such that the first guide section (25a) and the second arc section (24b) are arranged in order along the direction of rotation (DRT) around the second rotational axis (AX2). The second guide section (25b) is connected to the second arc section (24b) opposite to the first guide section (25a). The second guide section (25b) projects in a second tangential direction (DT2) at a second junction (J2) of the second arc section (24b) and the second guide section (25b). The second tangential direction (DT2) is inclined from the first tangential direction (DT1) in the direction of rotation (DRT). The deck wheel (16) is configured to move the mower deck (10) in a front direction (DF) and a rear direction (DB) opposite to the front direction (DF). A first angle (θ1) made by the first tangential direction (DT1) and the rear direction (DB) is larger than a second angle (θ2) made by the second tangential direction (DT2) and the rear direction (DB). With this configuration, the relationship between the first tangential direction (DT1) and the second tangential direction (DT2) and the relationship between the first angle (θ1) and the second angle (θ2) effectively directs the grass clippings discharged from the first discharge opening (23a) and the second discharge opening (23b) toward the center of the rear left wheel (5L) and the rear right wheel (5R) in the left-right direction (DS), when the second cutting chamber (22b) is provided between the rear wheels (5) in the left-right direction (DS).

In a preferred embodiment, a tangential direction of the second arc section (24b) at the second junction (J2) is substantially identical to the second tangential direction (DT2). The second guide section (25b) has a linear shape as viewed along the second rotational axis (AX2). With this configuration, it is possible to discharge the grass clipping smoothly through the second discharge opening (23b).

In a preferred embodiment, the second tangential direction (DT2) is substantially identical to the rear direction (DB). This configuration more effectively directs the grass clippings discharged from the first discharge opening (23a) and the second discharge opening (23b) toward the center of the rear left wheel (5L) and the rear right wheel (5R) in the left-right direction (DS).

In a preferred embodiment, a tangential direction of the first arc section (24a) at the first junction (J1) is substantially identical to the first tangential direction (DT1). The first guide section (25a) has a linear shape as viewed along the first rotational axis (AX1). With this configuration, it is possible to discharge the grass clipping smoothly through the first discharge opening (23a).

In a preferred embodiment, the first peripheral baffle (20a) further comprises a first additional guide section (26a) connected to the first arc section (24a) opposite to the first guide section (25a) and projecting in a fourth tangential direction (DT4) at a fourth junction (J4) of the first arc section (24a) and the first additional guide section (26a). The first tangential direction (DT1) is inclined from the fourth tangential direction (DT4) in the direction of rotation (DRT). With this configuration, the first guide section (25a) is more directed toward the center of the rear left wheel (5L) and the rear right wheel (5R) in the left-right direction (DS).

Preferably, the first additional guide section (26a) is wider than the first guide section (25a) along the first rotational axis (AX1) such that the first cutting blade (50a) is provided between the top wall (12) and a bottom (26abt) of the first additional guide section (26a) along the first rotational axis (AX1). This configuration reduces an amount of the clippings to be discharged in the leftward direction (DSL) and the rightward direction (DSR).

In a preferred embodiment, the mower deck (10) further comprises a first guard baffle (28a) protruding from the top wall (12). The first guard baffle (28a) extends from a first outer baffle end (28ao) to a first inner baffle end (28ai) apart from the second rotational axis (AX2) in the rear direction (DB). The first outer baffle end (28ao) adjoins a distal end (25ad) of the first guide section (25a) that is opposite to a proximal end (25ap) of the first guide section (25a) that is connected to the first arc section (24a). A distance (D2) between the second rotational axis (AX2) and the first inner baffle end (28ai) is shorter than the distance (D3) between the second rotational axis (AX2) and an inner end (58) of a lift (56) of the second cutting blade (50b) in the radial direction (DRAD) with respect to the second rotational axis (AX2). With this configuration, it is possible to further effectively keep the grass clippings from re-entering the first cutting area (29a).

In a preferred embodiment, the mower deck (10) includes a third cutting blade (50c) and a third peripheral baffle (20c). The third cutting blade (50c) is mounted on the top wall (12) to be rotatable in the direction of rotation DRT around the third rotational axis (AX3). The third peripheral baffle (20c) protrudes from the top wall (12) to define a third cutting chamber (22c) housing the third cutting blade (50c). The third peripheral baffle (20c) comprises a third arc section (24c) and a third guide section (25c). The third arc section (24c) has an arc shape with respect to the third rotational axis (AX3). The third arc section (24c) is connected to the second guide section (25b) such that the second guide section (25b) and the third arc section (24c) are arranged in order along the direction of rotation (DRT) around the third rotational axis (AX3). The third guide section (25c) is connected to the third arc section (24c) opposite to the second guide section (25b). The third guide section (25c) projects in a third tangential direction (DT3) at a third junction (J3) of the third arc section (24c) and the third guide section (25c). The third tangential direction DT3 is inclined from the second tangential direction DT2 in the direction of rotation DRT. This configuration more effectively directs the grass clippings discharged from the first discharge opening (23a), the second discharge opening (23b), and the third discharge opening (23c) toward the center of the rear left wheel (5L) and the rear right wheel (5R) in the left-right direction (DS).

Preferably, the third guide section (25c) is wider than the second guide section (25b) along the third rotational axis (AX3) such that the third cutting blade (50c) is provided between the top wall (12) and a bottom (25cbt) of the third guide section (25c) along the third rotational axis (AX3). This configuration reduces an amount of the clippings to be discharged in another of the leftward direction (DSL) and the rightward direction (DSR).

In a preferred embodiment, a tangential direction of the third arc section (24c) at the third junction (J3) is substantially identical to the third tangential direction (DT3). The third guide section (25c) has a linear shape as viewed along the third rotational axis (AX3). With this configuration, it is possible to discharge the grass clipping smoothly through the third discharge opening 23c.

In a preferred embodiment, the mower deck (10) further comprises a second guard baffle (28b) protruding from the top wall (12). The second guard baffle (28b) extends from a second outer baffle end (28bo) to a second inner baffle end (28bi) apart from the third rotational axis (AX3) in the rear direction (DB). The second outer baffle end (28bo) adjoins a distal end (25bd) of the second guide section (25b) that is opposite to a proximal end (25bp) of the second guide section (25b) that is connected to the second arc section (24b). A distance (D1) between the third rotational axis (AX3) and the second inner baffle end (28bi) in the front-rear direction (DFB) as viewed along the third rotational axis (AX3) is shorter than a distance (D3) between the third rotational axis (AX3) and an inner end (58) of a lift (56) of the third cutting blade (50c) in a radial direction (DRAD) with respect to the third rotational axis (AX3). With this configuration, it is possible to further effectively keep the grass clippings from re-entering the cutting area (29).

Preferably, a tangential direction of the second guard baffle (28b) at the second inner baffle end (28bi) is inclined from the third tangential direction (DT3) in the direction of rotation (DRT). The third tangential direction (DT3) is inclined from a tangential direction of the second guard baffle (28b) at the second outer baffle end (28bo) in the direction of rotation (DRT). This configuration more effectively directs the grass clippings discharged from the third discharge opening (23c) toward a space between the rear left wheel (5L) and the rear right wheel (5R) in the left-right direction (DS).

In a preferred embodiment, a mower (1) comprises the mower deck (10) having the features described above, a vehicle frame (2), and wheels (3). The vehicle frame (2) supports the mower deck (10). The wheels (3) are attached to the vehicle frame (2) to move the vehicle frame (2). The wheels (3) comprise a rear wheel (5) apart from the third cutting blade (50c) in the rear direction (DB). An extension (EXT1) of the third guide section (25c) which extends in the third tangential direction (DT3) is provided in front of a tire tread (TT) of the rear wheel (5). This configuration reduces an amount of the grass clippings discharged from the third cutting chamber (22c) and trodden by the rear wheel (5).

In a preferred embodiment, a mower (1) comprises the mower deck (10) having the features described above, a vehicle frame (2), and rear wheels (5). The vehicle frame (2) supports the mower deck (10). The rear wheels (5) are attached to the vehicle frame (2) apart from the mower deck (10) in the rear direction (DB) and arranged in a left-right direction (DS) perpendicular to the front direction (DF) and to the rear direction (DB). The second cutting chamber (22b) is provided between the rear wheels (5) in the left-right direction (DS). With this configuration, the relationship between the first tangential direction (DT1) and the second tangential direction (DT2) and the relationship between the first angle (θ1) and the second angle (θ2) effectively directs the grass clippings discharged from the first discharge opening (23a) and the second discharge opening (23b) toward the center of the rear left wheel (5L) and the rear right wheel (5R) in the left-right direction (DS).

In a preferred embodiment, a mower (1) comprises the mower deck (10) having the features described above, a vehicle frame (2), and rear wheels (5). The vehicle frame (2) supports the mower deck (10). The rear wheels (5) are attached to the vehicle frame (2) apart from the mower deck (10) in the rear direction (DB) to move the vehicle frame (2). An extension (EXT5) extending from the first guard baffle (28a) in a direction (DT5) from the first inner baffle end (28ai) to the first outer baffle end (28ao) (corresponding to the fifth tangential direction (DT5)), is provided between the rear wheels (5) in the left-right direction (DS) such that the extension (EXT5) does not cross any of the rear wheels (5). This configuration reduces an amount of the grass clippings discharged from the second cutting chamber (22b) and trodden by the rear wheels (5).

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 shows a perspective view of the mower.
FIG. 2 shows a left side view of the mower when the mower deck is raised.
FIG. 3 shows a left side view of the mower when the mower deck is lowered.
FIG. 4 shows a bottom view of the mower.
FIG. 5 shows a top view of the mower deck when the top cover is removed.
FIG. 6 shows an enlarged bottom view of the mower deck.
FIG. 7 shows a bottom perspective view of the mower deck.
FIG. 8 shows a perspective view of one type (50A) of the cutting blade.
FIG. 9 shows a right side view of the mower deck.
FIG. 10 shows a left side view of the mower deck.
FIG. 11 shows a rear view of the mower deck.
FIG. 12 shows the rear view of the clamp with the third guide section, the first additional guide section, and the guide wall removed.
FIG. 13 shows a simulation result calculating the grass clipping flows.
FIG. 14 shows a perspective view of another type (50B) of the cutting blade.
FIG. 15 shows an enlarged bottom view of the mower deck using the other type (50B) of the cutting blade.

### DESCRIPTION OF THE EMBODIMENTS

### <Mower>

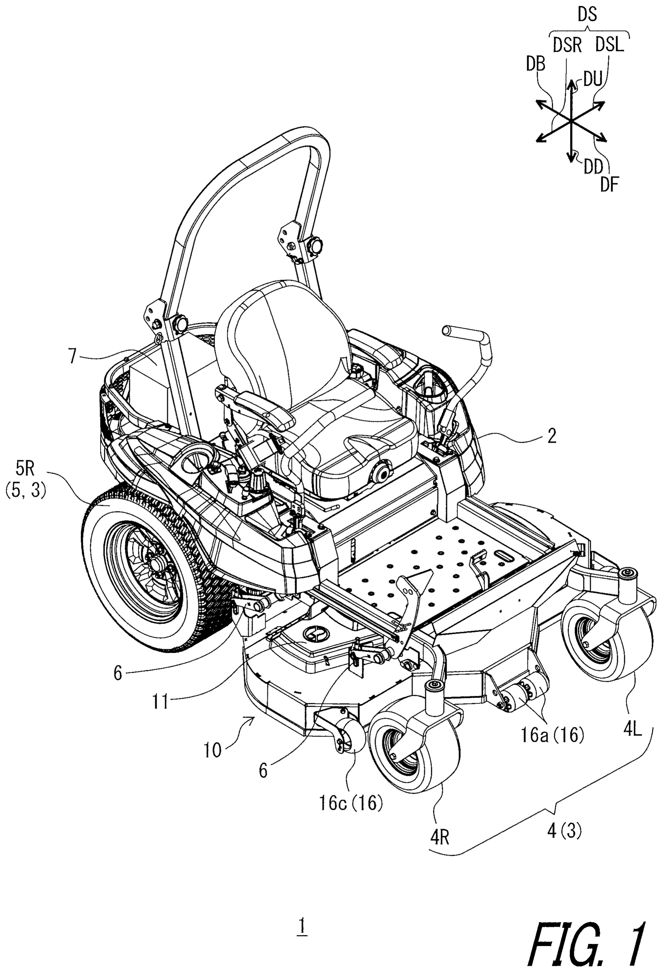

FIG. 1 shows a perspective view of a mower 1. The mower 1 includes a vehicle frame 2, wheels 3, a deck lift 6, an engine 7, and a mower deck 10. The vehicle frame 2 supports the wheels 3, the deck lift 6, and the engine 7. The vehicle frame 2 serves as the structural backbone of the mower 1, providing the necessary support and stability for the wheels 3, the deck lift 6, the engine 7, and other components of the mower 1. The vehicle frame 2 is designed to withstand the stresses and strains of mower operation, ensuring the mower's durability and longevity. The deck lift 6 supports the mower deck 10. Accordingly, the vehicle frame 2 supports the mower deck 10 via the deck lift 6.

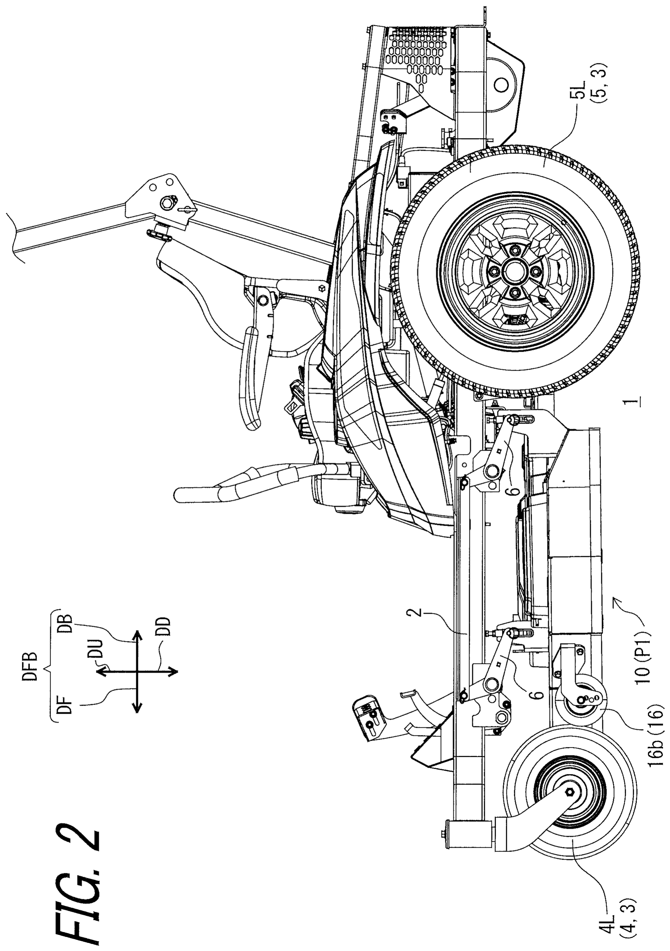

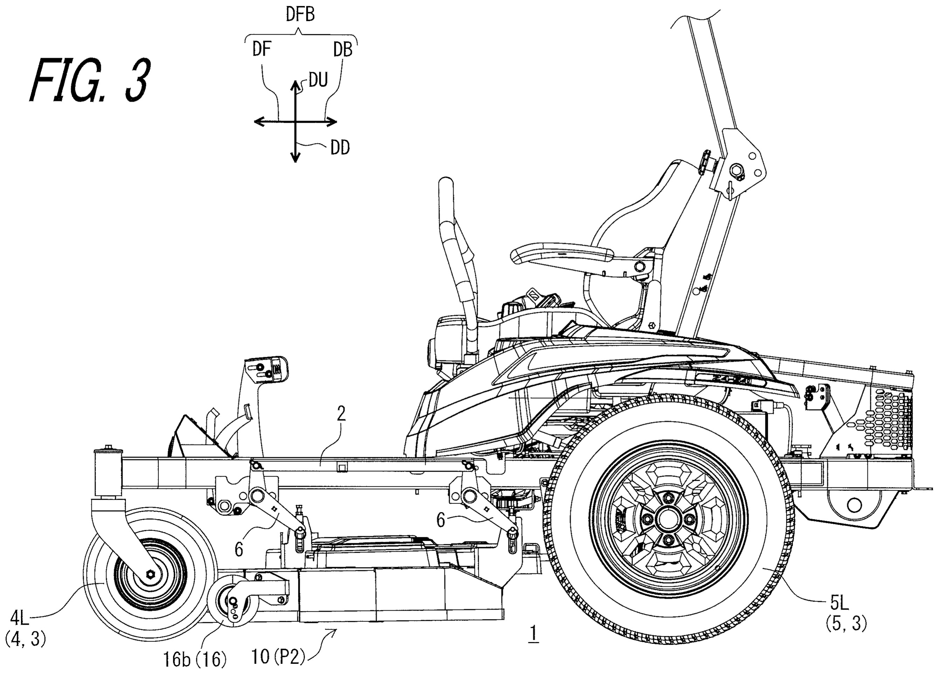

The wheels 3 are attached to the vehicle frame 2 to move the vehicle frame 2. The wheels 3 include front wheels 4, and rear wheels 5. The front wheels 4 include a front left wheel 4L and a front right wheel 4R. The rear wheels 5 include a rear left wheel 5L and a rear right wheel 5R (the rear left wheel 5L is not shown, but shown in FIGS. 2, 3 etc.). Each of the rear left wheel 5L and the rear right wheel 5R are driven by respective hydraulic motors (not shown), thereby the rear left wheel 5L and the rear right wheel 5R can rotate in the same direction or opposite directions. The rear wheels 5 are attached to the vehicle frame 2, allowing for the movement of the mower 1 in both a front direction DF and a rear direction DB opposite to the front direction DF when the rear wheels 5 rotate in the same direction and the same speed. In this embodiment, a bilateral direction including the front direction DF and the rear direction DB can be referred to as a front-rear direction DFB. The mower 1 can turn to either a leftward direction DSL or a rightward direction DSR depending on the speed and the direction in which each of the rear left wheel 5L and the rear right wheel 5R rotates. In this embodiment, a bilateral direction including the leftward direction DSL and the rightward direction DSR can be referred to as a left-right direction DS. The rear wheels 5 are provided apart from the mower deck 10 in the rear direction DB and arranged in a left-right direction DS perpendicular to the front-rear direction DFB.

The mower deck 10 includes a top cover 11. The top cover 11 is configured to protect the internal components of the mower deck 10 from external elements. The engine 7 provides the necessary power for the operation of the mower 1. The engine 7 is also configured to drive the internal components. The internal components are explained hereinafter. The mower deck 10 is also equipped with deck wheels 16, including central deck wheels 16a, a left deck wheel 16b (the left deck wheel 16b is not shown, but shown in FIG. 2, 3 etc.), and a right deck wheel 16c. These deck wheels 16 provide additional support to the mower deck 10 and is configured to move the mower deck 10 in the front direction DF and the rear direction DR opposite to the front direction DF.

FIG. 2 illustrates a left side view of the mower 1 with the mower deck 10 positioned at a raised position P1. FIG. 3 illustrates a left side view of the mower 1 with the mower deck 10 positioned at the lowered position P2. As shown in FIGS. 2 and 3, the deck lift 6, which is attached to the vehicle frame 2, is configured to adjust the height of the mower deck 10. More specifically, the deck lift 6 is configured to move the mower deck 10 in the upward direction DU and in the downward direction DD. This allows for the customization of the cutting height, enabling the user to achieve a desired grass length.

Typically, the vehicle frame 2 and the mower deck 10 are robust and durable, designed to withstand the rigors of mowing operations. In a different configuration, the vehicle frame 2 and the mower deck 10 could be made from a variety of materials, including but not limited to metal alloys, composites, or reinforced plastics, depending on the desired strength, weight, and cost considerations. Similarly, the wheels 3 and the deck wheels 16 could be of different types, such as pneumatic tires, solid rubber tires, or plastic wheels, each offering different levels of traction, durability, and ride comfort. The deck lift 6 could utilize various mechanisms for height adjustment, including hydraulic, mechanical, or electric systems. The mower deck 10 could also be designed in various shapes and sizes to accommodate different types and numbers of cutting blades 50, and to suit different mowing requirements.

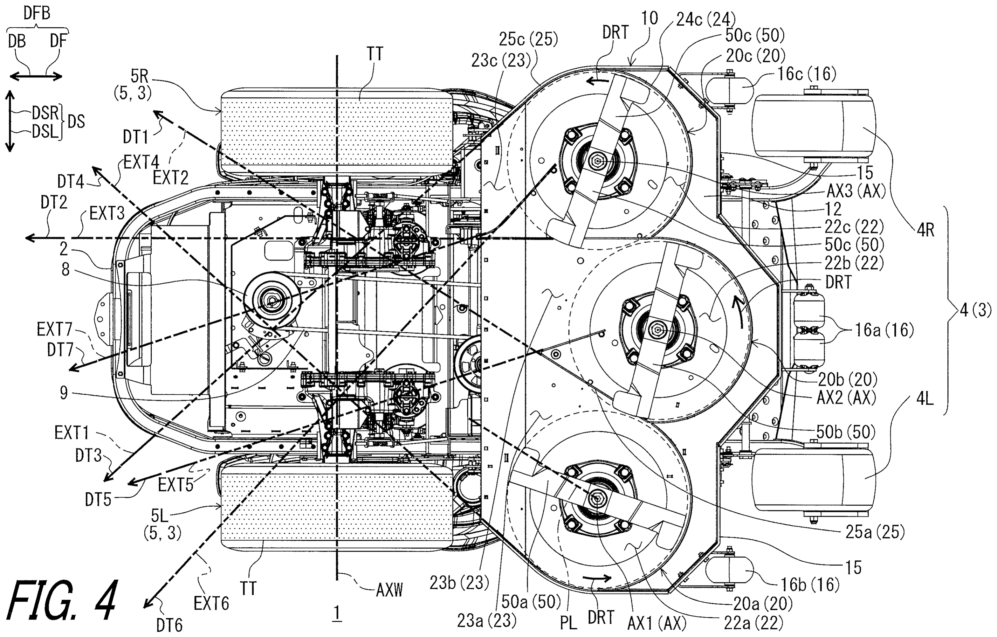

FIG. 4 presents the bottom view of a mower 1, showcasing the unique arrangement of cutting blades 50 and the configuration of peripheral baffles 20. The cutting blades 50 are configured to rotate in a direction of rotation DRT around rotational axes AX to clip grass. The cutting blades 50 includes a first cutting blade 50a, a second cutting blade 50b, and a third cutting blade 50c. The first cutting blade 50a, the second cutting blade 50b, and the third cutting blade 50c can be collectively referred to as a cutting blade 50. The first cutting blade 50a is rotatable in the direction of rotation DRT around the first rotational axis AX1. The second cutting blade 50b is rotatable in the direction of rotation DRT around the second rotational axis AX2. The third cutting blade 50c is rotatable in the direction of rotation DRT around the third rotational axis AX3.

The mower deck 10 includes a top wall 12 and the peripheral baffles 20. The cutting blades 50 are rotatably mounted on the top wall 12. The peripheral baffles 20 protrude from the top wall 12 to define cutting chambers 22 housing the cutting blades 50. Clippings of the grass, which have been clipped by the cutting blades 50, flow in the cutting chambers 22. Each of the peripheral baffles 20 defines a discharge opening 23 configured such that the clippings are discharged through the discharge opening 23. In this embodiment, the discharge opening 23 is provided apart from the cutting blade 50 in the rear direction DB. The cutting chambers 22 are defined by the top wall 12 and the peripheral baffles 20. More specifically, the peripheral baffles 20 include a first peripheral baffle 20a, a second peripheral baffle 20b, and a third peripheral baffle 20c. The first peripheral baffle 20a, the second peripheral baffle 20b, and the third peripheral baffle 20c can be collectively referred to as a peripheral baffle 20. The cutting chambers 22 include a first cutting chamber 22a, a second cutting chamber 22b, a third cutting chamber 22c which are defined by the first peripheral baffle 20a, the second peripheral baffle 20b, and the third peripheral baffle 20c, respectively. The first cutting chamber 22a, the second cutting chamber 22b, the third cutting chamber 22c can be collectively referred to as a cutting chamber 22. The first cutting chamber 22a houses the first cutting blade 50a. The second cutting chamber 22b houses the second cutting blade 50b. The third cutting chamber 22c houses the third cutting blade 50c. As seen in FIG. 4, the first cutting chamber 22a is in front of one of the rear left wheel 5L and the rear right wheel 5R. The third cutting chamber 22c is in front of another of the rear left wheel 5L and the rear right wheel 5R. The second cutting chamber 22b is provided between the rear wheels 5 in the left-right direction DS.

### <Drive Train>

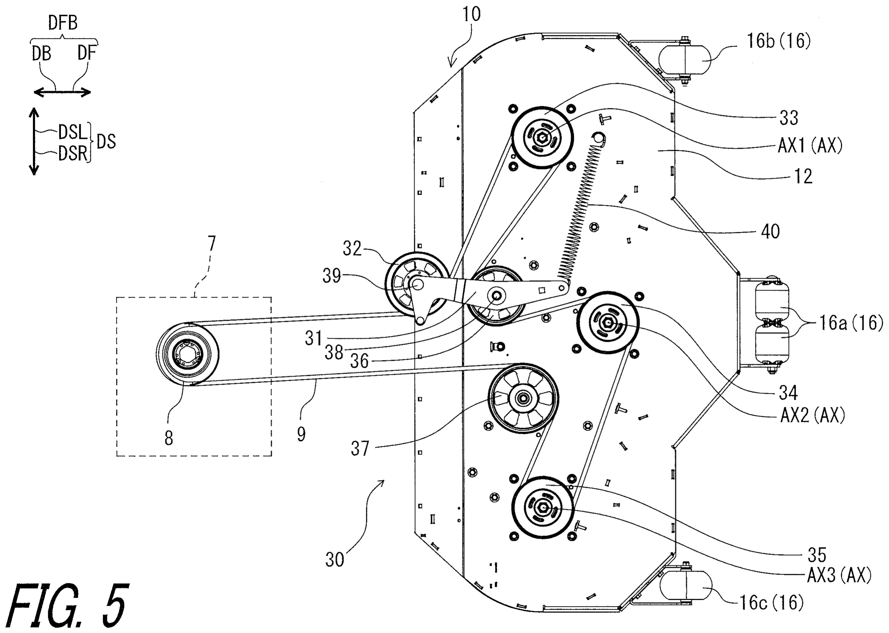

FIG. 5 shows a top view of the mower deck 10 with the top cover 11 removed. As shown in FIG. 5, the mower 1 includes a drive train 30 configured to rotate the cutting blades 50. The drive train 30 includes a drive pulley 8, a drive belt 9, an idler arm 31, an idler pulley 32, multiple driven pulleys 33, 34, 35, tensioning pulleys 36, 37, a pivot 38, an axle 39, and a tension spring 40.

The drive pulley 8 is the primary power input for the drive train 30. It is typically connected to the engine 7 and is configured to rotate to drive the drive belt 9. Features such as a clutch mechanism to engage or disengage the drive pulley 8 with the engine 7 may be incorporated between the engine 7 and the drive pulley 8.

The drive belt 9 is a continuous loop that transfers power from the drive pulley 8 to the driven pulleys 33, 34, 35. More specifically, the drive belt 9 loops around the drive pulley 8, the idler pulley 32, and the driven pulleys 33, 34, 35, The drive belt 9 is typically made of reinforced rubber or synthetic materials designed for high flexibility and durability. The drive belt 9 may have a V-shaped or multi-ribbed profile to increase grip on the pulleys. Some advanced designs may incorporate embedded fibers or sensors to monitor belt wear and tension.

The driven pulleys 33, 34, 35 are connected to the spindles of the first cutting blade 50a, the second cutting blade 50b, and the third cutting blade 50c and rotate to power the first cutting blade 50a, the second cutting blade 50b, and the third cutting blade 50c, respectively. These spindles may incorporate bearings and seals to ensure smooth operation and prevent contamination. In this embodiment, the number of driven pulleys 33, 34, 35 are three. However, the drive train 30 may have a different number of driven pulleys. In some embodiments, the driven pulleys 33, 34, 35 may have different diameters to achieve varying blade speeds across the mower deck. The tensioning pulleys 36, 37 are engaged with the drive belt 9 to ensure efficient power transfer and prevent belt slippage.

The idler pulley 32 is mounted on the idler arm 31 to be rotatable around the axle 39. The idler pulley 32 is configured to be engaged by the drive belt 9 to provide tension. The tension spring 40 is configured to pull the idler arm 31 to rotate the idler arm 31 around the pivot 38 to move the idler pulley 32 such that the idler pulley 32 provides a proper tension. Each of the drive pulley 8, the idler pulley 32, the driven pulleys 33, 34, 35, and the tensioning pulleys 36, 37 are typically made of durable materials such as steel or high-strength plastics and incorporates sealed bearings for smooth operation. Each of the drive pulley 8, the idler pulley 32, the driven pulleys 33, 34, 35, and the tensioning pulleys 36, 37 may have a flat or grooved surface depending on the belt design and tension requirements.

In operation, power is transferred from the engine 7 to the drive pulley 8, which rotates the drive belt 9. The drive belt 9 then transfers this rotational power to the driven pulleys 33, 34, 35 which in turn power the cutting blades 50. The tensioning pulleys 36, 37 and the idler arm 31, the idler pulley 32, and the tension spring 40 work together to maintain proper belt tension throughout the system, ensuring efficient power transfer and prolonging belt life. However, the mower 1 may have a different structure of the drive train 30.

### <Specific structure of the peripheral baffles>

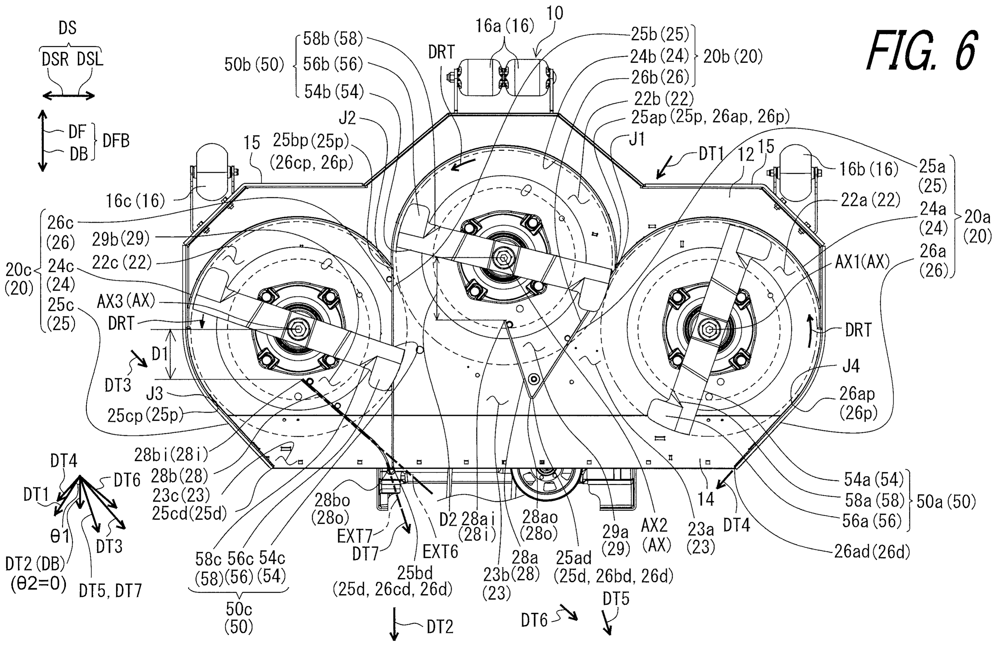

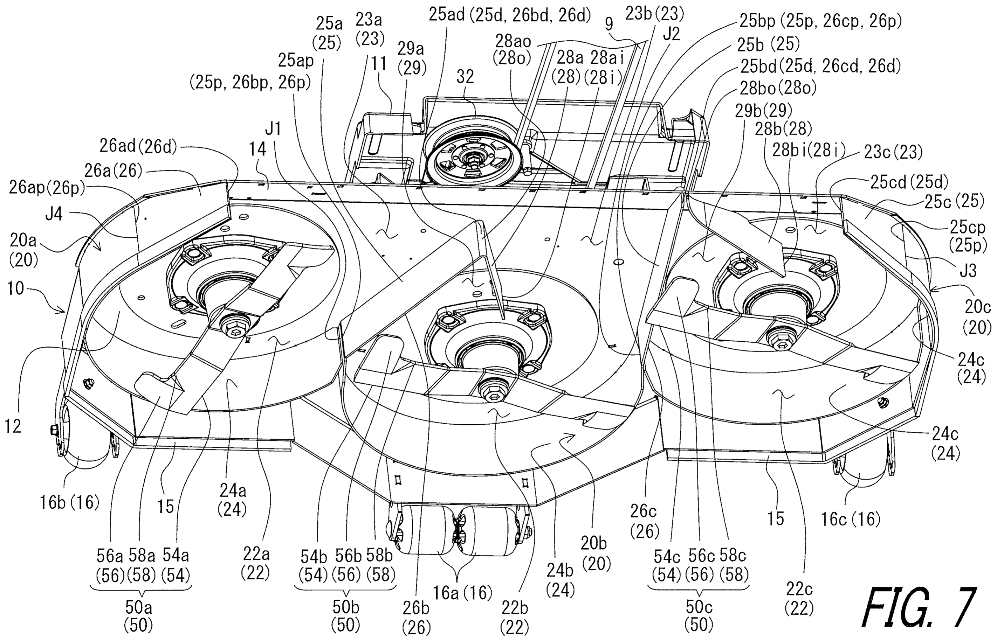

FIG. 6 illustrates an enlarged bottom view of the mower deck 10. FIG. 7 illustrates a bottom perspective view of the mower deck 10. As seen in FIGS. 6 and 7, peripheral baffles 20 protrudes from the top wall 12. More specifically, the first peripheral baffle 20a, the second peripheral baffle 20b, and the third peripheral baffle 20c. protrude from the top wall 12. As seen in FIGS. 4, 6, and 7, each of the peripheral baffles 20 includes an arc section 24, a guide section 25, an additional guide section 26. The arc section 24 has an arc shape with respect to the rotational axis AX corresponding to each of the peripheral baffles 20. The guide section 25 is connected to the arc section 24 such that the arc section 24 and the guide section 25 are arranged in order along the direction of rotation DRT around the rotational axis AX corresponding to each of the peripheral baffles 20. The guide section 25 is configured to guide the clippings toward the discharge opening 23. The guide section 25 has a linear shape as viewed along the rotational axis AX. The guide section 25 has a proximal end 25p connected to the arc section 24 and a distal end 25d opposite to the proximal end 25p. The additional guide section 26 is connected to the arc section 24 opposite to the guide section 25. The additional guide section 26 has a linear shape as viewed along the rotational axis AX. The additional guide section 26 has an additional proximal end 26p connected to the arc section 24 and an additional distal end 26d opposite to the additional proximal end 26p. The distal end 25d and the additional distal end 26d define the discharge opening 23.

More specifically, the first peripheral baffle 20a includes a first arc section 24a, a first guide section 25a, a first additional guide section 26a. The second peripheral baffle 20b includes a second arc section 24b, a second guide section 25b, a second additional guide section 26b. The third peripheral baffle 20c includes a third arc section 24c, a third guide section 25c, a third additional guide section 26c. The first arc section 24a, the second arc section 24b, the third arc section 24c can be collectively referred to as the arc section 24. The first guide section 25a, the second guide section 25b, the third guide section 25c can be collectively referred to as the guide section 25. The first additional guide section 26a, the second additional guide section 26b, the third additional guide section 26c can be collectively referred to as the additional guide section 26.

As shown in FIGS. 4 and 6, the first arc section 24a has an arc shape with respect to the first rotational axis AX1. The first guide section 25a is connected to the first arc section 24a such that the first arc section 24a and the first guide section 25a are arranged in order along the direction of rotation DRT around the first rotational axis AX1. The first guide section 25a has a linear shape as viewed along the first rotational axis AX1 and projects in a first tangential direction DT1 at a first junction J1 of the first arc section 24a and the first guide section 25a. The first guide section 25a has a proximal end 25ap connected to the first arc section 24a and a distal end 25ad opposite to the proximal end 25ap. A tangential direction of the first arc section 24a at the first junction J1 is substantially identical to the first tangential direction DT1. As seen in FIG. 4, an extension EXT2 of the first guide section 25a which extends in the first tangential direction DT1 reaches the rear right wheel 5R in the rear of the rear wheel axis AXW.

The first additional guide section 26a is connected to the first arc section 24a opposite to the first guide section 25a. The first additional guide section 26a has a linear shape as viewed along the first rotational axis AX1 and projects in a fourth tangential direction DT4 at a fourth junction J4 of the first arc section 24a and the first additional guide section 26a. The first additional guide section 26a has an additional proximal end 26ap connected to the first arc section 24a and an additional distal end 26ad opposite to the additional proximal end 26ap. The distal end 25ad of the first guide section 25a and the additional distal end 26ad of the first additional guide section 26a define the first discharge opening 23a. A tangential direction of the first arc section 24a at the fourth junction J4 is substantially identical to the fourth tangential direction DT4. The first tangential direction DT1 is inclined from the fourth tangential direction DT4 in the direction of rotation DRT. As seen in FIG. 4, an extension EXT4 of the first additional guide section 26a which extends in the fourth tangential direction DT4 grazes the rear left wheel 5L and extends toward the rear of the rear right wheel 5R.

The second arc section 24b has an arc shape with respect to the second rotational axis AX2. The second arc section 24b is connected to the first guide section 25a such that the first guide section 25a and the second arc section 24b are arranged in order along the direction of rotation DRT around the second rotational axis AX2. The second guide section 25b is connected to the second arc section 24b such that the second arc section 24b and the second guide section 25b are arranged in order along the direction of rotation DRT around the second rotational axis AX2.

The second guide section 25b has a linear shape as viewed along the second rotational axis AX2 and projects in a second tangential direction DT2 at a second junction J2 of the second arc section 24b and the second guide section 25b. The second guide section 25b has a proximal end 25bp connected to the second arc section 24b and a distal end 25bd opposite to the proximal end 25bp. A tangential direction of the second arc section 24b at the second junction J2 is substantially identical to the second tangential direction DT2. The second tangential direction DT2 is inclined from the first tangential direction DT1 in the direction of rotation DRT. A first angle θ1 made by the first tangential direction DT1 and the rear direction DB is larger than a second angle θ2 made by the second tangential direction DT2 and the rear direction DB. More specifically, the second tangential direction DT2 is substantially identical to the rear direction DB. As seen in FIG. 4, an extension EXT3 of the second guide section 25b which extends in the second tangential direction DT2 passes between the rear left wheel 5L and the rear right wheel 5R.

An identical baffle plate serves as both the second additional guide section 26b and the first arc section 24a. The second additional guide section 26b is connected to the second arc section 24b opposite to the second guide section 25b. The second additional guide section 26b has a linear shape as viewed along the second rotational axis AX2. The second additional guide section 26b has an additional proximal end 26bp connected to the second arc section 24b and an additional distal end 26bd opposite to the additional proximal end 26bp. The distal end 25bd of the second guide section 25b and the additional distal end 26bd of the second additional guide section 26b define the second discharge opening 23b.

The third arc section 24c has an arc shape with respect to the third rotational axis AX3. The third arc section 24c is connected to the second guide section 25b such that the second guide section 25b and the third arc section 24c are arranged in order along the direction of rotation DRT around the third rotational axis AX3. The third guide section 25c is connected to the third arc section 24c opposite to the second guide section 25b such that the third arc section 24c and the third guide section 25c are arranged in order along the direction of rotation DRT around the third rotational axis AX3.

The third guide section 25c has a linear shape as viewed along the third rotational axis AX3 and projects in a third tangential direction DT3 at a third junction J3 of the third arc section 24c and the third guide section 25c. The third guide section 25c has a proximal end 25cp connected to the third arc section 24c and a distal end 25cd opposite to the proximal end 25cp. A tangential direction of the third arc section 24c at the third junction J3 is substantially identical to the third tangential direction DT3. The third tangential direction DT3 is inclined from the second tangential direction DT2 in the direction of rotation DRT. An angle made by the third tangential direction DT3 and the rear direction DB is larger than the second angle θ2. As seen in FIG. 4, an extension EXT1 of the third guide section 25c which extends in the third tangential direction DT3 is provided in front of a tire tread TT of the rear right wheel 5R in the front-rear direction DFB. The rear right wheel 5R is a rear wheel 5 apart from the third cutting blade 50c in the rear direction DB. The extension EXT1 passes between the rear left wheel 5L and the rear right wheel 5R.

An identical baffle plate serves as both the third additional guide section 26c and the second arc section 24b. The third additional guide section 26c is connected to the third arc section 24c opposite to the third guide section 25c. The third additional guide section 26c has a linear shape as viewed along the third rotational axis AX3. The third additional guide section 26c has an additional proximal end 26cp connected to the third arc section 24c and an additional distal end 26cd opposite to the additional proximal end 26cp. The distal end 25cd of the third guide section 25c and the additional distal end 26cd of the third additional guide section 26c define the third discharge opening 23c.

Considering features of the first peripheral baffle 20a, the second peripheral baffle 20b, and the third peripheral baffle 20c, a tangential direction of the arc section 24 at a junction (J1, J2, J3) of the arc section 24 and the guide section 25 is substantially identical to the projecting direction (DT1, DT2, DT3). The proximal end 25ap of the first guide section 25a, the proximal end 25bp of the second guide section 25b, and the proximal end 25cp of the third guide section 25c can be collectively referred to as the proximal end 25p of the guide section 25. The distal end 25ad of the first guide section 25a, the distal end 25bd of the second guide section 25b, and the distal end 25cd of the third guide section 25c can be collectively referred to as the distal end 25d of the guide section 25. The additional proximal end 26ap of the first additional guide section 26a, the additional proximal end 26bp of the second additional guide section 26b, the additional proximal end 26cp of the third additional guide section 26c can be collectively referred to as the additional proximal end 26p of the additional guide section 26. The additional distal end 26ad of the first additional guide section 26a, the additional distal end 26bd of the second additional guide section 26b, and the additional distal end 26cd of the third additional guide section 26c can be collectively referred to as the additional distal end 26d of the additional guide section 26.

### <Guard baffle>

As shown in FIGS. 6 and 7, the mower deck 10 further includes a guard baffle 28 protruding from the top wall 12 in the cutting chamber 22 to guide the clippings toward the discharge opening 23. More specifically, the mower deck 10 further includes a first guard baffle 28a protruding from the top wall 12 in the second cutting chamber 22b to guide the clippings toward the second discharge opening 23b. The mower deck 10 further includes a second guard baffle 28b protruding from the top wall 12 in the third cutting chamber 22c to guide the clippings toward the third discharge opening 23c. The mower deck 10 does not include a guard baffle 28 in the first cutting chamber 22a. The reasons why the mower deck 10 does not include a guard baffle 28 in the first cutting chamber 22a is explained below.

The guard baffle 28 is provided to keep the clippings of grass from re-entering a cutting area 29 in which the grass is usually cut by the cutting blade 50. More specifically, the first guard baffle 28a is provided to keep the clippings of grass from re-entering a first cutting area 29a in which the grass is usually cut by the second cutting blade 50b. The second guard baffle 28b is provided to keep the clippings of grass from re-entering a second cutting area 29b in which the grass is usually cut by the second cutting blade 50b.

The guard baffle 28 is provided opposite to the guide section 25 to guide the clippings toward the discharge opening 23. The guard baffle 28 extends from an outer baffle end 28o to an inner baffle end 28i. The outer baffle end 28o is provided at the discharge opening 23. More specifically, the outer baffle end 28o adjoins the additional distal end 26d. The closer to the rotational axis AX (the baffle spindle of the cutting blade 50) the inner baffle end 28i is, the more effectively the clipping is kept from re-entering the cutting area 29. That is, the guard baffle 28 extends from the vicinity of the additional distal end 26d toward the rotational axis AX. The guard baffle 28 is provided such that the cutting area 29 is provided opposite to the discharge opening 23 with respect to the guard baffle 28.

More specially, the first guard baffle 28a is provided opposite to the second guide section 25b to guide the clippings toward the second discharge opening 23b. The first guard baffle 28a extends from a first outer baffle end 28ao to a first inner baffle end 28ai. The first outer baffle end 28ao is provided at the second discharge opening 23b. More specifically, the first outer baffle end 28ao adjoins the additional distal end 26bd of the second additional guide section 26b (the distal end 25ad of the first guide section 25a). The closer to the second rotational axis AX2 (the baffle spindle of the second cutting blade 50b) the first inner baffle end 28ai is, the more effectively the clipping is kept from re-entering the first cutting area 29a. That is, the first guard baffle 28a extends from the vicinity of the additional distal end 26bd of the second additional guide section 26b toward the second rotational axis AX2. The first guard baffle 28a is provided such that the first cutting area 29a is provided opposite to the second discharge opening 23b with respect to the first guard baffle 28a.

More specially, the second guard baffle 28b is provided opposite to the third guide section 25c to guide the clippings toward the third discharge opening 23c. The second guard baffle 28b extends from a second outer baffle end 28bo to a second inner baffle end 28bi. The second outer baffle end 28bo is provided at the third discharge opening 23c. More specifically, the second outer baffle end 28bo adjoins the additional distal end 26cd of the third additional guide section 26c (the distal end 25bd of the second guide section 25b). The closer to the third rotational axis AX3 (the baffle spindle of the third cutting blade 50c) the second inner baffle end 28bi is, the more effectively the clipping is kept from re-entering the second cutting area 29b. That is, the second guard baffle 28b extends from the vicinity of the additional distal end 26cd of the third additional guide section 26c toward the third rotational axis AX3. The second guard baffle 28b is provided such that the second cutting area 29b is provided opposite to the third discharge opening 23c with respect to the second guard baffle 28b.

In order to explain how close to the rotational axis AX the inner baffle end 28i is preferably, the structure of the cutting blade 50 is explained. The cutting blade 50 can be made from different materials, such as steel, aluminum, or plastic. The choice of material can affect the durability and performance of the cutting blade 50. For instance, a steel blade can be more durable but heavier, while a plastic blade can be lighter but less durable. The choice of material can also affect the cost of the cutting blade 50, and can be chosen according to the specific budget of the user.

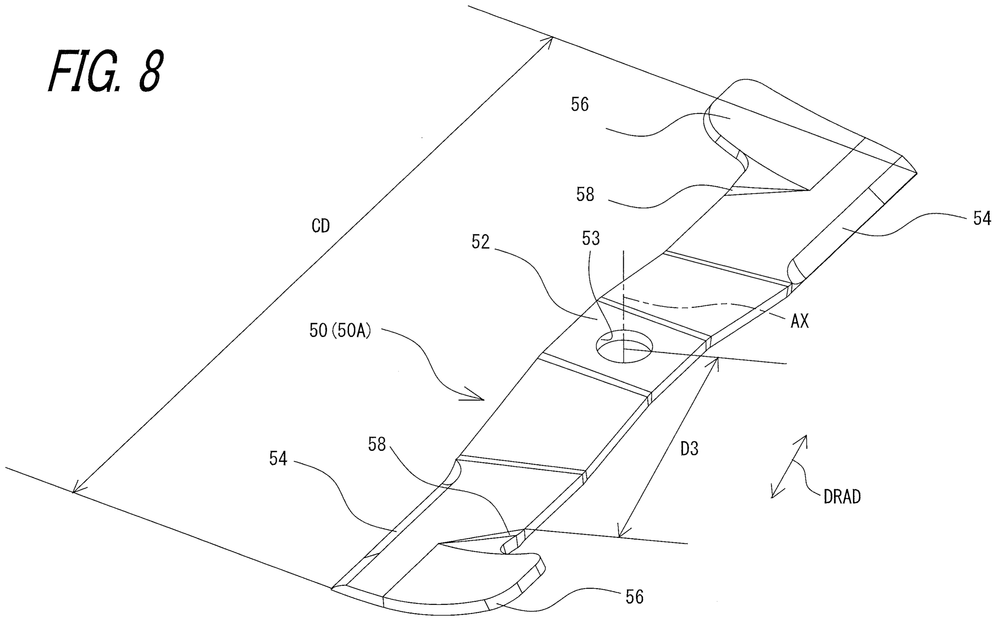

FIG. 8 shows a perspective view of one type (50A) of the cutting blade 50. This type 50A of the cutting blades 50 are also shown in FIGS. 4, 6, and 7. As shown in FIG. 8, the cutting blade 50 includes a central portion 52, cutting edges 54, and lifts 56. The central portion 52 has a through hole 53 through which a blade spindle of the cutting blade 50 passes. The blade spindle is connected to any of the driven pulleys 33, 34, 35. The cutting edges 54 serve a function to cut the grass. The lifts 56 serve to direct the grass upward for effectively cutting the grass. The cutting blade 50 has a cutting diameter CD which is a length between a tip end of the one of the cutting edges 54 and a tip end of another of the cutting edges 54. The tip end of each of the cutting edges 54 means a furthest point of each of the cutting edges 54 from the rotational axis AX. The cutting blade 50 has a distance D3 the rotational axis AX and an inner end 58 of a lift 56 of the cutting blade 50 in a radial direction DRAD with respect to the rotational axis AX.

In FIG. 6, a two-dot chain line around the first rotational axis AX1 shows a circular trajectory along which the tip ends of the cutting edges 54 of the first cutting blade 50a pass. A two-dot chain line around the second rotational axis AX2 shows a circular trajectory along which the tip ends of the cutting edges 54 of the second cutting blade 50b pass. A two-dot chain line around the third rotational axis AX3 shows a circular trajectory along which the tip ends of the cutting edges 54 of the third cutting blade 50c pass. Accordingly, a diameter of the circular trajectory shown in the two-dot chain line is the cutting diameter CD, and a radius of the circular trajectory shown in the two-dot chain line is a half of the cutting diameter CD.

A dotted line around the first rotational axis AX1 shows a circular trajectory along which the inner ends 58 of the lifts 56 of the first cutting blade 50a pass. A dotted line around the second rotational axis AX2 shows a circular trajectory along which the inner ends 58 of the lifts 56 of the second cutting blade 50b pass. A dotted line around the third rotational axis AX3 shows a circular trajectory along which the inner ends 58 of the lifts 56 of the third cutting blade 50c pass. Accordingly, a radius of the circular trajectory shown in the dotted line is the distance D3.

As shown in FIG. 6, the inner baffle end 28i is apart from the rotational axis in the rear direction, and a distance between the rotational axis AX and the inner baffle end 28i is shorter than a half of the cutting diameter CD of the cutting blade 50 as viewed along the rotational axis AX. More specifically, the first inner baffle end 28ai is apart from the second rotational axis AX2 in the rear direction DB, and a distance D2 between the second rotational axis AX2 and the first inner baffle end 28ai as viewed in along the second rotational axis is shorter than a half of the cutting diameter CD of the second cutting blade 50b as viewed along the second rotational axis AX2. The second inner baffle end 28bi is apart from the third rotational axis AX3 in the rear direction DB, and a distance D1 between the third rotational axis AX3 and the second inner baffle end 28bi as viewed along the third rotational axis AX3 is shorter than a half of the cutting diameter CD of the third cutting blade 50c as viewed along the third rotational axis AX3.

Preferably, as viewed along the rotational axis AX, the distance between the rotational axis AX and the inner baffle end 28i is shorter than the distance D3 between the rotational axis AX and the inner end 58 of the lift 56 of the cutting blade 50 in the radial direction DRAD with respect to the rotational axis AX. More specifically, the distance D2 between the second rotational axis AX2 and the first inner baffle end 28ai is shorter than the distance D3 between the second rotational axis AX2 and the inner end 58 of the lift 56 of the second cutting blade 50b in the radial direction DRAD with respect to the second rotational axis AX2. The distance D1 between the third rotational axis AX3 and the second inner baffle end 28bi is shorter than the distance D3 between the third rotational axis AX3 and the inner end 58 of the lift 56 of the third cutting blade 50c in the radial direction DRAD with respect to the third rotational axis AX3.

Furthermore, in the first guard baffle 28a, the first outer baffle end 28ao is connected to the additional distal end 26bd of the second additional guide section 26b (the distal end 25ad of the first guide section 25a). That is, the first outer baffle end 28ao (the outer baffle end 28o) is identical to the distal end 25ad of the first guide section 25a (the distal end 25d of the guide section 25). Accordingly, the first guard baffle 28a, the first guide section 25a, and the second additional guide section 26b are formed by bending a single baffle plate.

Furthermore, the first guard baffle 28a has a linear shape as viewed along the second rotational axis AX2 and projects in a fifth tangential direction DT5. The fifth tangential direction DT5 is a direction from the first inner baffle end 28ai to the first outer baffle end 28ao. As seen in FIG. 4, an extension EX5 extending from the first guard baffle 28a in the fifth tangential direction DT5, which is a direction from the first inner baffle end 28ai to the first outer baffle end 28ao, is provided between the rear wheels 5 in the left-right direction DS such that the extension EX5 does not cross any of the rear wheels 5. The fifth tangential direction DT5 is inclined from the second tangential direction DT2 in the direction of rotation DRT.

As shown in FIG. 6, the second inner baffle end 28bi is apart from the third rotational axis AX3 in the rear direction DB. The second guard baffle 28b bends between the second inner baffle end 28bi and the second outer baffle end 28bo. The second guard baffle 28b projects in a sixth tangential direction DT6 at the second inner baffle end 28bi. The sixth tangential direction DT6 is inclined from the third tangential direction DT3 in the direction of rotation DRT. The second guard baffle 28b projects in a seventh tangential direction DT7 at the second outer baffle end 28bo. The third tangential direction DT3 is inclined from the seventh tangential direction DT7 in the direction of rotation DRT.

As seen in FIG. 4, an extension EXT6 of the second guard baffle 28b at the second inner baffle end 28bi, which extends in the sixth tangential direction DT6, reaches the rear left wheel 5L in the rear of the rear wheel axis AXW. An extension EXT7 of the second guard baffle 28b at the second outer baffle end 28bo, which extends in the seventh tangential direction DT7, passes between the rear left wheel 5L and the rear right wheel 5R. This feature reduces an amount of the clippings which are discharged from the third discharge opening 23c to reach the rear left wheel 5L.

The peripheral baffle 20 is free of an additional arc section having the arc shape with respect to the rotational axis AX connecting the additional guide section 26 and the guard baffle 28. More specifically, the second peripheral baffle 20b is free of an additional arc section having the arc shape with respect to the second rotational axis AX2 connecting the second additional guide section 26b and the first guard baffle 28a. The third peripheral baffle 20c is free of an additional arc section having the arc shape with respect to the third rotational axis AX3 connecting the third additional guide section 26c and the second guard baffle 28b. For example, in the second peripheral baffle 20b, the second arc section 24b does not extend to a space between second additional guide section 26b and the first guard baffle 28a. In the third peripheral baffle 20c, the third arc section 24c does not extend to a space between the third additional guide section 26c and the second guard baffle 28b.

### <Other features of mower deck>

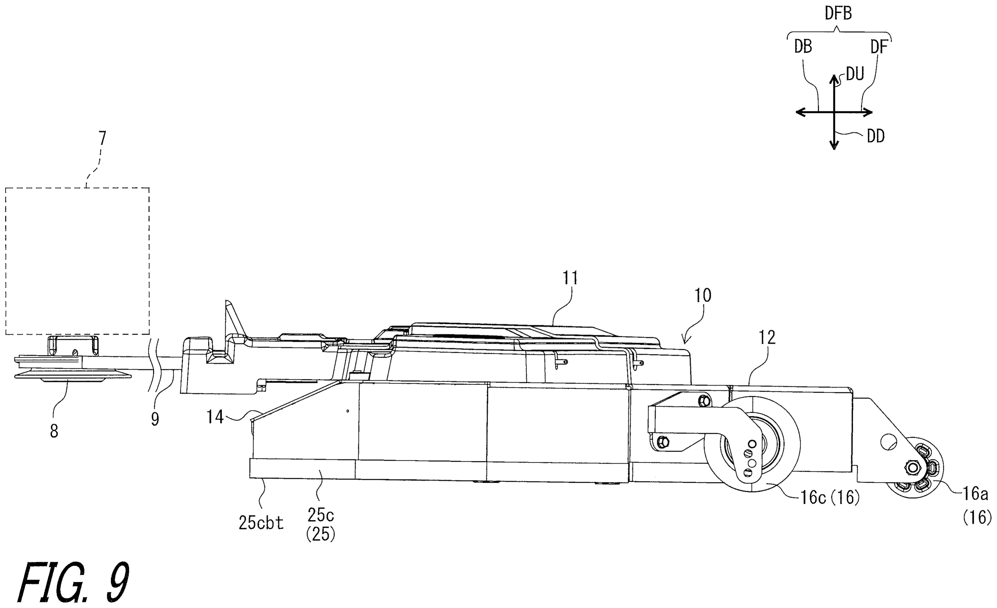

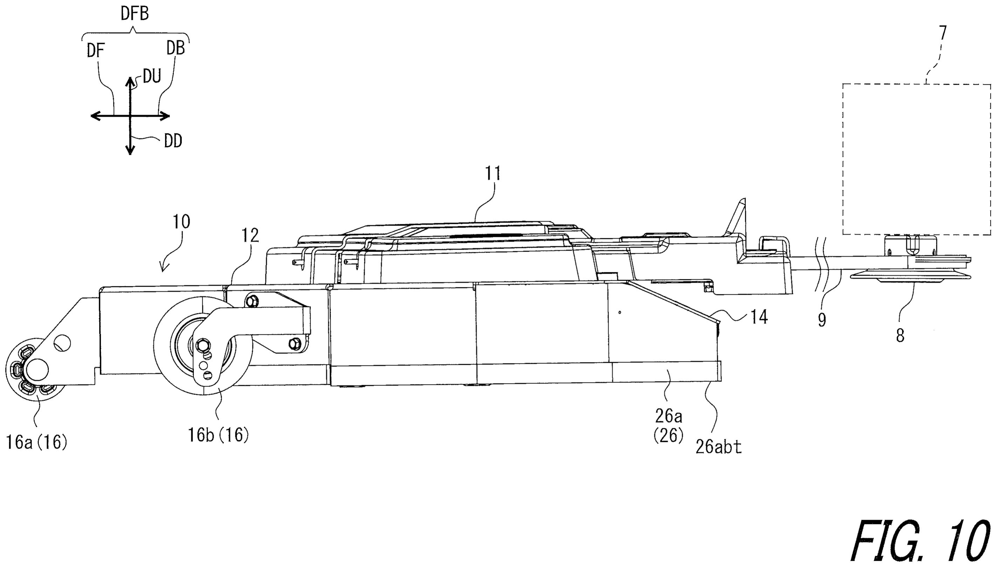

FIG. 9 illustrates a right-side view of the mower deck 10 is illustrated. FIG. 10 illustrates a left side view of the mower deck 10. As seen in FIGS. 9 and 10, the mower deck 10 includes a guide wall 14 slanted in the downward direction DD from the top wall 12. As seen in FIG. 9, the third guide section 25c extends from top wall 12 to a bottom 25cbt of the third guide section 25c along the third rotational axis AX3 to cover the third cutting blade 50c as viewed in the leftward direction DSL. As seen in FIG. 9, the first additional guide section 26a extends from the top wall 12 to a bottom 26abt of the first additional guide section 26a to cover the first cutting blade 50a as viewed in the rightward direction DSR.

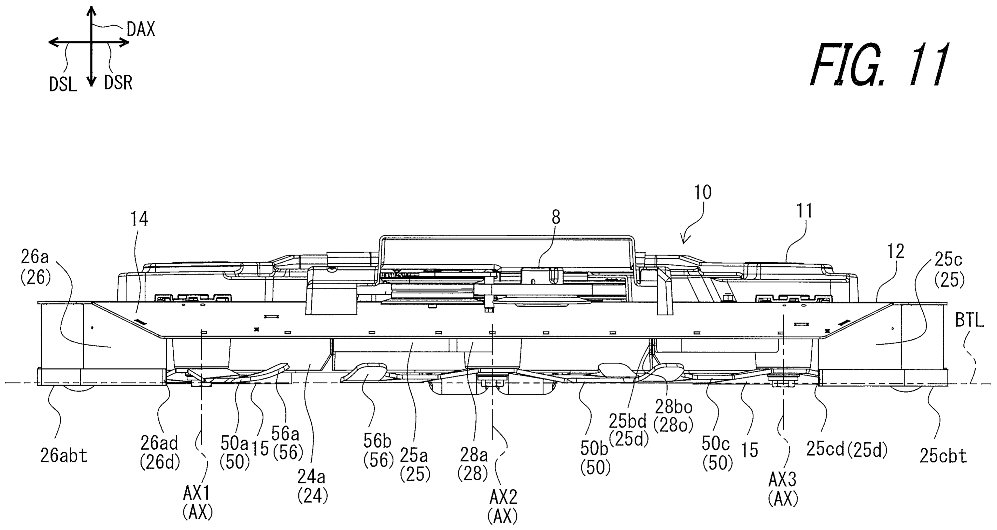

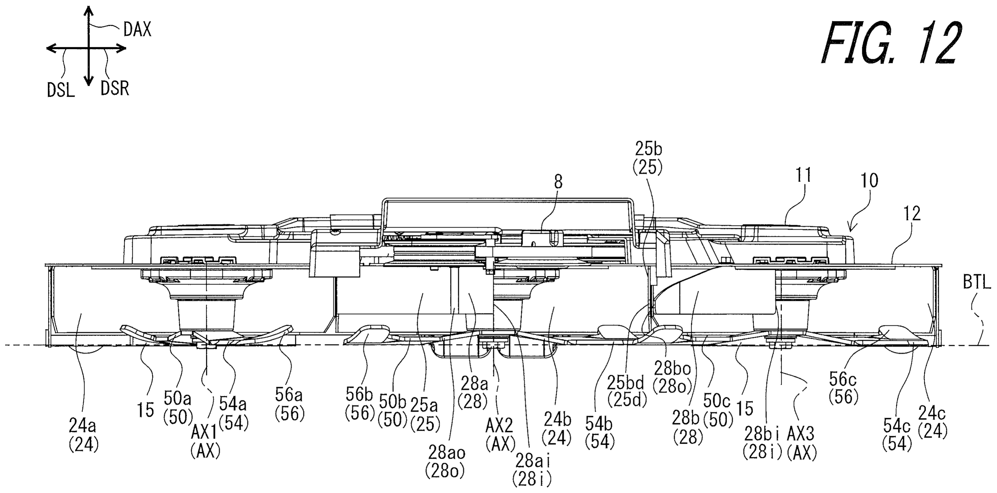

FIG. 11 illustrates a rear view of the mower deck 10. FIG. 12 illustrates a rear view of the mower deck 10 with the third guide section 25c, the first additional guide section 26a, and the guide wall 14 removed. FIGS. 11 and 12 depict a bottom line BTL of the cutting blades 50. As seen in FIGS. 11 and 12, the guide section 25 is provided between the top wall 12 and the cutting blade 50 along the rotational axis AX. More specifically, the first guide section 25a is provided between the top wall 12 and the first cutting blade 50a (the second cutting blade 50b) along the first rotational axis AX1 (the second rotational axis AX2). The second guide section 25b is provided between the top wall 12 and the second cutting blade 50b along the second rotational axis AX2.

However, as shown in FIG. 11, the third guide section 25c is wider than the second guide section 25b (the distal end 25bd of the second guide section 25b in FIG. 10) along the third rotational axis AX3 such that the third cutting blade 50c is provided between the top wall 12 and the bottom 25cbt of the third guide section 25c along the third rotational axis AX3. The first additional guide section 26a is wider than the first guide section 25a along the first rotational axis AX1 such that the first cutting blade 50a is provided between the top wall 12 and a bottom 26abt of the first additional guide section 26a along the first rotational axis AX1. This structure reduces an amount of the clippings to be discharged in the leftward direction DSL and the rightward direction DSR.

As shown in FIG. 12, the arc section 24 is wider than the guide section 25 (more specifically, the first guide section 25a, the second guide section 25b) in an axial direction DAX along the rotational axis AX such that at least part of the cutting blade 50 overlaps with the arc section 24 as viewed in a radial direction with respect to the rotational axis AX. This feature makes the arc section 24 to effectively guide the clippings toward the discharge opening 23. As shown in FIGS. 4, 6, 7, 11, and 12, the mower deck 10 includes a front wide wall 15 covering a front-left side of the first arc section 24a and a front-right side of the third arc section 24c. The front wide wall 15 is wider than the first arc section 24a along the first rotational axis AX1 such that the first cutting blade 50a is provided between the top wall 12 and a bottom of the front wide wall 15. The front wide wall 15 is wider than the third arc section 24c along the third rotational axis AX3 such that the third cutting blade 50c is provided between the top wall 12 and a bottom of the front wide wall 15 (which corresponds to the bottom 25cbt of the third guide section 25c). This structure also reduces an amount of the clippings to be discharged in the leftward direction DSL and the rightward direction DSR.

Furthermore, as seen in FIGS. 7 and 12, a gap between the guard baffle 28 and the cutting blade 50 along the rotational axis AX is so small such that a negative pressure is generated in the cutting area 29 opposite to an outlet (e.g. the discharge opening 23) with respect to the guard baffle 28, the outlet being defined between the guide section 25 and the guard baffle 28. Accordingly, the grass tends to be directed in the upward direction DU and thus, it facilitates cutting the grass by the cutting blades 50.

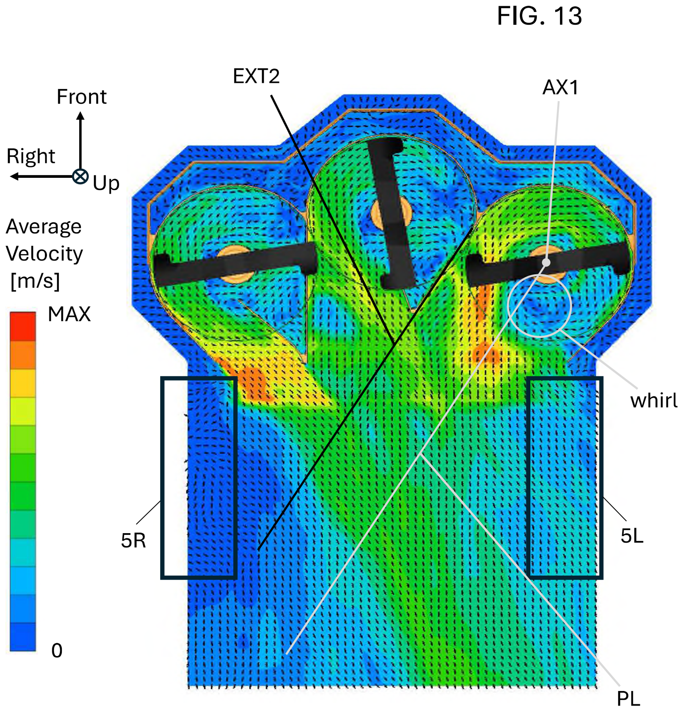

FIG. 13 shows a simulation result calculating the grass clipping flows. As shown in FIG. 13, a whirl is generated adjacent to the parallel line PL due to the rotation of the first cutting blade 50a. The parallel line PL is parallel to the first guide section 25a and the extension EXT2. Accordingly, it is possible to keep the clippings of grass from re-entering a cutting area 29 in which the grass is usually cut by the cutting blade 50, even though the guard baffle 28 is omitted in the first cutting chamber 22a. In the first cutting chamber 22a, the cutting area 29 is located next to the whirl in the direction of rotation DRT. The parallel line PL is provided in front of the rear left wheel 5L, and the parallel line PL does not cross the rear right wheel 5R. This feature reduces an amount of the grass clippings discharged from the second cutting chamber 22b and trodden by the rear wheels 5.

### ADVANTAGEOUS EFFECTS OF THE EMBODIMENT

With the mower deck 10 and the mower 1 according to the embodiment, the mower deck 10 includes the cutting blade 50, the top wall 12, the peripheral baffle 20, and the guard baffle 28. The cutting blade 50 is configured to rotate in the direction of rotation DRT around the rotational axis AX to clip grass. The cutting blade 50 is rotatably mounted on the top wall 12. The peripheral baffle 20 protrudes from the top wall 12. The top wall 12 and the peripheral baffle 20 define the cutting chamber 22 configured such that clippings of the grass flow in the cutting chamber 22. The peripheral baffle 20 defines the discharge opening 23 configured such that the clippings are discharged through the discharge opening 23. The mower deck 10 further includes a guard baffle 28 protruding from the top wall 12 in the cutting chamber 22 to guide the clippings toward the discharge opening 23. Accordingly, it is possible to effectively keep the grass clippings from re-entering the cutting area 29.

The guard baffle 28 extends to the inner baffle end 28i from the outer baffle end 28o provided at the discharge opening 23, and the distance between the rotational axis AX and the inner baffle end 28i being shorter than the half of the cutting diameter CD of the cutting blade 50 as viewed along the rotational axis AX. Accordingly, it is possible to more effectively keep the grass clippings from re-entering the cutting area 29.

The inner baffle end 28i is apart from the rotational axis AX in the rear direction DB. As viewed along the rotational axis AX, the distance between the rotational axis AX and the inner baffle end 28i is shorter than the distance D3 between the rotational axis AX and the inner end 58 of the lift 56 of the cutting blade 50 in the radial direction DRAD with respect to the rotational axis AX. Accordingly, it is possible to further effectively keep the grass clippings from re-entering the cutting area 29.

The peripheral baffle 20 includes the arc section 24, and a guide section 25. The arc section 24 has an arc shape with respect to the rotational axis AX. The guide section 25 is connected to the arc section 24 such that the arc section 24 and the guide section 25 are arranged in order along the direction of rotation DRT around the rotational axis AX. The guide section 25 is provided opposite to the guard baffle 28 to guide the clippings toward the discharge opening 23. Accordingly, it is possible to discharge the grass clipping effectively.

The guide section 25 has a linear shape as viewed along the rotational axis AX and projects in a projecting direction (DT1, DT2, DT3). The tangential direction of the arc section 24 at the junction (J1, J2, J3) of the arc section 24 and the guide section 25 is substantially identical to the projecting direction (DT1, DT2, DT3). Accordingly, it is possible to discharge the grass clipping smoothly.

The peripheral baffle 20 further includes the additional guide section 26 connected to the arc section 24 opposite to the guide section 25. The guide section 25 has the proximal end 25p connected to the arc section 24 and the distal end 25d opposite to the proximal end 25p. The additional guide section 26 has the additional proximal end 26p connected to the arc section 24 and the additional distal end 26d opposite to the additional proximal end 26p. The distal end 25d and the additional distal end 26d define the discharge opening 23. The additional guide section 26 has a linear shape as viewed along the rotational axis AX. The outer baffle end 28o adjoins the additional distal end 26d. Accordingly, it maximizes a size of outlet of the cutting chamber 22 through which the grass clippings are discharged.

The first outer baffle end 28ao (the outer baffle end 28o) is identical to the distal end 25ad of the first guide section 25a (the additional distal end 26bd of the second additional guide section 26b). Accordingly, the first guard baffle 28a, the second additional guide section 26b, and optionally the first guide section 25a are formed by bending a single baffle plate.

The peripheral baffle 20 is free of an additional arc section having the arc shape with respect to the rotational axis AX and connecting the additional guide section 26 and the guard baffle 28. Accordingly, it reduces the material of the mower deck 10.

A gap between the guard baffle 28 and the cutting blade 50 along the rotational axis AX is so small such that a negative pressure is generated in the cutting area 29 opposite to an outlet (e.g. the discharge opening 23) with respect to the guard baffle 28, the outlet being defined between the guide section 25 and the guard baffle 28. Accordingly, the grass tends to be directed in the upward direction DU and thus, it facilitates cutting the grass by the cutting blades 50.

The guide section 25 is provided between the top wall 12 and the cutting blade 50 along the rotational axis AX. The arc section 24 is wider than the guide section 25 in an axial direction DAX along the rotational axis AX such that at least part of the cutting blade 50 overlaps with the arc section 24 as viewed in a radial direction with respect to the rotational axis AX. This feature avoids interference of rotation of the cutting blade 50, and makes the arc section 24 to effectively guide the clippings toward the discharge opening 23.

The mower deck 10 includes a deck wheel 16 configured to move the mower deck 10 in the front direction DF and the rear direction DB opposite to the front direction DF. The discharge opening 23 is provided apart from the cutting blade 50 in the rear direction DB. Accordingly, the mower deck 10 can discharge the clippings in the rear direction DB.

The mower deck 10 includes the first cutting blade 50a, the second cutting blade 50b, the top wall 12, the first peripheral baffle 20a, the second peripheral baffle 20b, and the deck wheel 16. The first cutting blade 50a is rotatable in the direction of rotation DRT around the first rotational axis AX1. The second cutting blade 50b is rotatable in the direction of rotation DRT around the second rotational axis AX2. The first cutting blade 50a and the second cutting blade 50b are rotatably mounted on the top wall 12. The first peripheral baffle 20a protrudes from the top wall 12 to define the first cutting chamber 22a housing the first cutting blade 50a. The first peripheral baffle 20a includes the first arc section 24a and the first guide section 25a. The first arc section 24a has an arc shape with respect to the first rotational axis AX1. The first guide section 25a is connected to the first arc section 24a such that the first arc section 24a and the first guide section 25a are arranged in order along the direction of rotation DRT around the first rotational axis AX1. The first guide section 25a projects in the first tangential direction DT1 at the first junction J1 of the first arc section 24a and the first guide section 25a. The second peripheral baffle 20b protrudes from the top wall 12 to define the second cutting chamber 22b housing the second cutting blade 50b. The second peripheral baffle 20b includes the second arc section 24b and the second guide section 25b. The second arc section 24b has an arc shape with respect to the second rotational axis AX2 and is connected to the first guide section 25a such that the first guide section 25a and the second arc section 24b are arranged in order along the direction of rotation DRT around the second rotational axis AX2. The second guide section 25b is connected to the second arc section 24b opposite to the first guide section 25a. The second guide section 25b projects in the second tangential direction DT2 at the second junction J2 of the second arc section 24b and the second guide section 25b. The second tangential direction DT2 is inclined from the first tangential direction DT1 in the direction of rotation DRT. The deck wheel 16 is configured to move the mower deck 10 in the front direction DF and the rear direction DB opposite to the front direction DF. The first angle θ1 made by the first tangential direction DT1 and the rear direction DB is larger than the second angle θ2 made by the second tangential direction DT2 and the rear direction DB. The relationship between the first tangential direction DT1 and the second tangential direction DT2 and the relationship between the first angle θ1 and the second angle θ2 effectively directs the grass clippings discharged from the first discharge opening 23a and the second discharge opening 23b toward the center of the rear left wheel 5L and the rear right wheel 5R in the left-right direction DS, when the second cutting chamber 22b is provided between the rear wheels 5 in the left-right direction DS.

The second tangential direction DT2 is substantially identical to the rear direction DB. This structure more effectively directs the grass clippings discharged from the first discharge opening 23a and the second discharge opening 23b toward the center of the rear left wheel 5L and the rear right wheel 5R in the left-right direction DS.

A tangential direction of the second arc section 24b at the second junction J2 is substantially identical to the second tangential direction DT2. The second guide section 25b has a linear shape as viewed along the second rotational axis AX2. Accordingly, it is possible to discharge the grass clipping smoothly through the second discharge opening 23b.

A tangential direction of the first arc section 24a at the first junction J1 is substantially identical to the first tangential direction DT1. The first guide section 25a has a linear shape as viewed along the first rotational axis AX1. Accordingly, it is possible to discharge the grass clipping smoothly through the first discharge opening 23a.

The first peripheral baffle 20a includes the first additional guide section 26a connected to the first arc section 24a opposite to the first guide section 25a and projecting in the fourth tangential direction DT4 at the fourth junction J4 of the first arc section 24a and the first additional guide section 26a. The first tangential direction DT1 is inclined from the fourth tangential direction DT4 in the direction of rotation DRT. Accordingly, the first guide section 25a is more directed toward the center of the rear left wheel 5L and the rear right wheel 5R in the left-right direction DS.

The first additional guide section 26a is wider than the first guide section 25a along the first rotational axis AX1 such that the first cutting blade 50a is provided between the top wall 12 and the bottom 26abt of the first additional guide section 26a along the first rotational axis AX1. This structure reduces an amount of the clippings to be discharged in the leftward direction DSL and the rightward direction DSR.

The mower deck 10 further includes the first guard baffle 28a protruding from the top wall 12. The first guard baffle 28a extends from the first outer baffle end 28ao to the first inner baffle end 28ai apart from the second rotational axis AX2 in the rear direction DB. The first outer baffle end 28ao adjoins the distal end 25ad of the first guide section 25a that is opposite to the proximal end 25ap of the first guide section 25a that is connected to the first arc section 24a. The distance D2 between the second rotational axis AX2 and the first inner baffle end 28ai is shorter than the distance D3 between the second rotational axis AX2 and the inner end 58 of the lift 56 of the second cutting blade 50b in the radial direction DRAD with respect to the second rotational axis AX2. Accordingly, it is possible to further effectively keep the grass clippings from re-entering the first cutting area 29a.

The mower deck 10 includes the third cutting blade 50c mounted on the top wall 12 to be rotatable in the direction of rotation DRT around the third rotational axis AX3. The third peripheral baffle 20c protrudes from the top wall 12 to define the third cutting chamber 22c housing the third cutting blade 50c. The third peripheral baffle 20c includes the third arc section 24c and the third guide section 25c. The third arc section 24c has an arc shape with respect to the third rotational axis AX3. The third arc section 24c is connected to the second guide section 25b such that the second guide section 25b and the third arc section 24c are arranged in order along the direction of rotation DRT around the third rotational axis AX3. The third guide section 25c is connected to the third arc section 24c opposite to the second guide section 25b. The third guide section 25c projects in the third tangential direction DT3 at the third junction J3 of the third arc section 24c and the third guide section 25c. The third tangential direction DT3 is inclined from the second tangential direction DT2 in the direction of rotation DRT. This feature more effectively directs the grass clippings discharged from the first discharge opening 23a, the second discharge opening 23b, and the third discharge opening 23c toward the center of the rear left wheel 5L and the rear right wheel 5R in the left-right direction DS.

The third guide section 25c is wider than the second guide section 25b along the third rotational axis AX3 such that the third cutting blade 50c is provided between the top wall 12 and the bottom 25cbt of the third guide section 25c along the third rotational axis AX3. This structure reduces an amount of the clippings to be discharged in another of the leftward direction DSL and the rightward direction DSR.

The tangential direction of the third arc section 24c at the third junction J3 is substantially identical to the third tangential direction DT3. The third guide section 25c has a linear shape as viewed along the third rotational axis AX3. Accordingly, it is possible to discharge the grass clipping smoothly through the third discharge opening 23c.

The mower deck 10 further includes the second guard baffle 28b protruding from the top wall 12. The second guard baffle 28b extends from the second outer baffle end 28bo to the second inner baffle end 28bi apart from the third rotational axis AX3 in the rear direction DB. The second outer baffle end 28bo adjoins the distal end 25bd of the second guide section 25b that is opposite to the proximal end 25bp of the second guide section 25b that is connected to the second arc section 24b. The distance D1 between the third rotational axis AX3 and the second inner baffle end 28bi is shorter than the distance D3 between the third rotational axis AX3 and the inner end 58 of the lift 56 of the third cutting blade 50c in the radial direction DRAD with respect to the third rotational axis AX3. Accordingly, it is possible to further effectively keep the grass clippings from re-entering the cutting area 29.

A tangential direction of the second guard baffle 28b at the second inner baffle end 28bi is inclined from the third tangential direction DT3 in the direction of rotation DRT. The third tangential direction DT3 is inclined from a tangential direction of the second guard baffle 28b at the second outer baffle end 28bo in the direction of rotation DRT. This feature more effectively directs the grass clippings discharged from the third discharge opening 23c toward a space between the rear left wheel 5L and the rear right wheel 5R in the left-right direction DS.

The extension EXT1 of the third guide section 25c which extends in the third tangential direction DT3 is provided in front of the tire tread TT of the rear wheel 5 apart from the third cutting blade 50c (the rear right wheel 5R) in the front-rear direction DFB. This feature reduces an amount of the grass clippings discharged from the third cutting chamber 22c and trodden by the rear right wheel 5R.

An extension EXT5 extending from the first guard baffle 28a in the fifth tangential direction DT5, which is a direction from the first inner baffle end 28ai to the first outer baffle end 28ao, is provided between the rear wheels 5 in the left-right direction DS such that the extension EX5 does not cross any of the rear wheels 5. This feature reduces an amount of the grass clippings discharged from the second cutting chamber 22b and trodden by the rear wheels 5.

### <Modification of the mower drive belt tensioner>

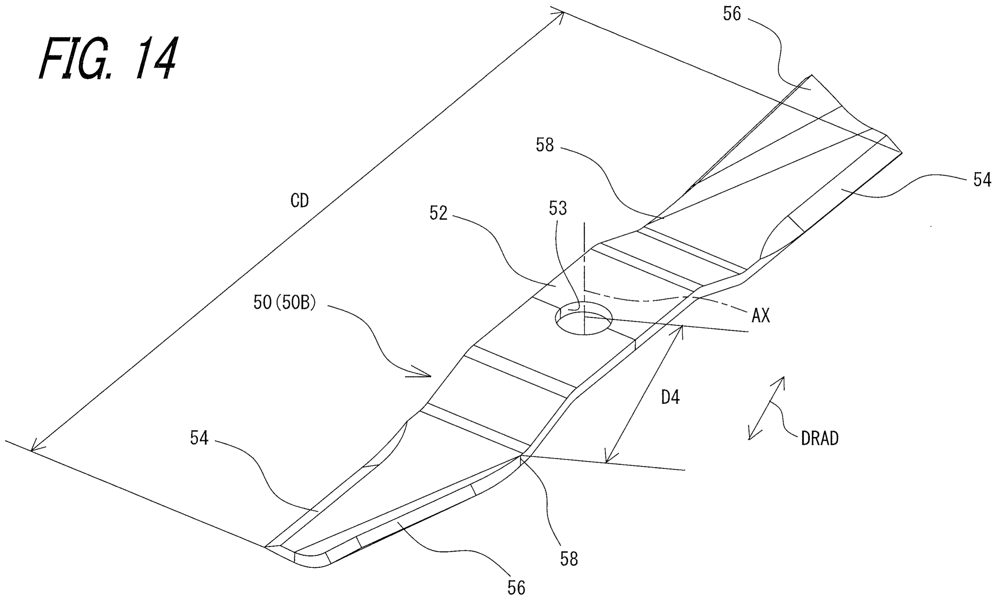

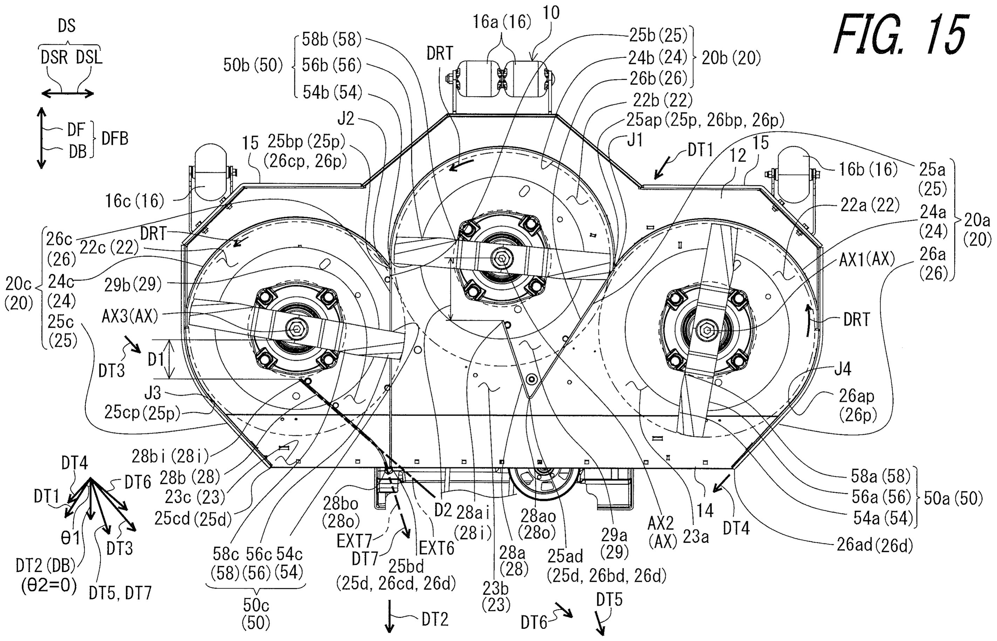

The mower deck 10 may use different types of cutting blades 50. FIG. 14 shows a perspective view of another type (50B) of the cutting blade 50. FIG. 15 shows an enlarged bottom view of the mower deck 10 using another type (50B) of the cutting blade 50. As shown in FIGS. 8 and 14, the type 50B of the cutting blade 50 is different from the type 50A of the cutting blade 50 in a shape of the lifts 56 and a distance the rotational axis AX and the inner end 58 of the lift 56 of the cutting blade 50 in a radial direction DRAD with respect to the rotational axis AX. The type 50B of the cutting blade has a distance D4 the rotational axis AX and the inner end 58 of the lift 56 of the cutting blade 50 in a radial direction DRAD with respect to the rotational axis AX.

In FIG. 15, a dotted line around the first rotational axis AX1 shows a circular trajectory along which the inner ends 58 of the lifts 56 of the first cutting blade 50a (the type 50B) pass. A dotted line around the second rotational axis AX2 shows a circular trajectory along which the inner ends 58 of the lifts 56 of the second cutting blade 50b (the type 50B) pass. A dotted line around the third rotational axis AX3 shows a circular trajectory along which the inner ends 58 of the lifts 56 of the third cutting blade 50c (the type 50B) pass. Accordingly, a radius of the circular trajectory shown in the dotted line is the distance D4.

As shown in FIG. 15, the distance D1 between the third rotational axis AX3 and the second inner baffle end 28bi is almost equal to the distance D4. The distance D2 between the second rotational axis AX2 and the first inner baffle end 28ai is larger than the distance D4. It is more effective to keep the clippings of grass from re-entering the cutting area 29 when the type 50A of the cutting blade 50 is used than when the type 50B of the cutting blade 50 is used. However, it is also effective to keep the clippings of grass from re-entering the cutting area 29 even when the type 50B of the cutting blade 50 is used.

In the above embodiment and modification, the direction of rotation DRT is anticlockwise when the bottom view of the mower deck 10 is seen. However, the direction of rotation DRT may be clockwise when the bottom view of the mower deck 10 is seen. In such case, the first peripheral baffle 20a (the first cutting chamber 22a) is in front of the rear right wheel 5R and the third peripheral baffle 20c (the third cutting chamber 22c) is in front of the rear left wheel 5L.

The present application refers to words "include" and derivatives as nonrestrictive terms for description of provision of constituent elements, without exclusion of any other constituent element not referred to in the present application. The same applies to words "have", "provided with", and derivatives thereof.

Expressions "member", "part", "element", "body", and "structure" may have a plurality of meanings indicating a single portion and a plurality of portions.

Ordinal numbers "first", "second", and the like are terms for simple distinction among configurations, without having any other meaning (e.g. specific order). For example, provision of a "first element" does not indicate provision of a "second element", and provision of the "second element" does not indicate provision of the "first element".

Expressions "substantially", "approximately", "about", and the like indicating degrees may each have a rational deviation not significantly changing a final result. All the numerical values referred to in the present application may be interpreted as including any one of the expressions "substantially", "approximately", "about", and the like.

In the present application, an expression "at least one of A and B" is interpreted to encompass (1) only A, (2) only B, and (3) both A and B.

In view of the above disclosure, the present invention can obviously include various modifications and alterations. The present invention may thus be implemented in any manner different from those specifically disclosed in the present application without departing from the spirit of the preset invention.

## Claims

1. A mower deck (10) comprising:
a cutting blade (50) configured to rotate in a direction of rotation (DRT) around a
rotational axis (AX) to clip grass;
a top wall (12) on which the cutting blade (50) is rotatably mounted;
a peripheral baffle (20) protruding from the top wall (12), the top wall (12) and the peripheral baffle (20) defining a cutting chamber (22) configured such that clippings of the grass flow in the cutting chamber (22), the peripheral baffle (20) defining a discharge opening (23) configured such that the clippings are discharged through the discharge opening (23); and
a guard baffle (28) protruding from the top wall (12) in the cutting chamber (22) to guide the clippings toward the discharge opening (23).

2. The mower deck (10) according to claim 1,
wherein the guard baffle (28) extends to an inner baffle end (28i) from an outer baffle end (28o) provided at the discharge opening (23), a distance between the rotational axis (AX) and the inner baffle end (28i) being shorter than a half of a cutting diameter (CD) of the cutting blade (50) as viewed along the rotational axis (AX).

3. The mower deck (10) according to claim 1 or 2,
wherein the peripheral baffle (20) comprises:
an arc section (24) having an arc shape with respect to the rotational axis (AX),
and
a guide section (25) connected to the arc section (24) such that the arc section (24) and the guide section (25) are arranged in order along the direction of rotation (DRT) around the rotational axis (AX), the guide section (25) being provided opposite to the guard baffle (28) to guide the clippings toward the discharge opening (23).

4. The mower deck (10) according to claim 3,
wherein the guide section (25) has a linear shape as viewed along the rotational axis (AX) and projects in a projecting direction (DT1, DT2, DT3), and
wherein a tangential direction of the arc section (24) at a junction (J1, J2, J3) of the arc section (24) and the guide section (25) is substantially identical to the projecting direction (DT1, DT2, DT3).

5. The mower deck (10) according to claim 3 or 4,
wherein the peripheral baffle (20) further comprises an additional guide section (26) connected to the arc section (24) opposite to the guide section (25),
wherein the guide section (25) has a proximal end (25p) connected to the arc section (24) and a distal end (25d) opposite to the proximal end (25p),
wherein the additional guide section (26) has an additional proximal end (26p) connected to the arc section (24) and an additional distal end (26d) opposite to the additional proximal end (26p),
wherein the distal end (25d) and the additional distal end (26d) define the discharge opening (23),
wherein the additional guide section (26) has a linear shape as viewed along the rotational axis (AX), and
wherein the outer baffle end (28o) adjoins the additional distal end (26d).

6. The mower deck (10) according to claim 5,
wherein the outer baffle end (28o) is identical to the additional distal end (26d).

7. The mower deck (10) according to claim 5 or 6,
wherein the peripheral baffle (20) is free of an additional arc section having the arc shape with respect to the rotational axis (AX) and connecting the additional guide section (26) and the guard baffle (28).

8. The mower deck (10) according to any one of claims 3 to 7,
wherein a gap between the guard baffle (28) and the cutting blade (50) along the rotational axis (AX) is so small such that a negative pressure is generated in a cutting area (29) opposite to an outlet with respect to the guard baffle (28) , the outlet being defined between the guide section (25) and the guard baffle (28).

9. The mower deck (10) according to any one of claims 3 to 8,
wherein the guide section (25) is provided between the top wall (12) and the cutting blade (50) along the rotational axis (AX), and
wherein the arc section (24) is wider than the guide section (25) along the rotational axis (AX) such that at least part of the cutting blade (50) overlaps with the arc section (24) as viewed in a radial direction with respect to the rotational axis (AX).

10. The mower deck (10) according to any one of claims 1 to 9, further comprising:
a deck wheel (16) configured to move the mower deck (10) in a front direction (DF) and a rear direction (DB) opposite to the front direction (DF),
wherein the discharge opening (23) is provided apart from the cutting blade (50) in the rear direction (DB).

11. The mower deck (10) according to claim 2 or any one of claims 3 to 10 when dependent on claim 2,
wherein the inner baffle end (28i) is apart from the rotational axis (AX) in the rear direction (DB), and
wherein as viewed along the rotational axis (AX), a distance between the rotational axis (AX) and the inner baffle end (28i) is shorter than a distance (D3) between the rotational axis (AX) and an inner end (58) of a lift (56) of the cutting blade (50) in a radial direction (DRAD) with respect to the rotational axis (AX).

12. The mower (1) comprising the mower deck (10) according to any one of claims 1 to 11.
